# EUROPÄISCHE PATENTSCHRIFT

(11) **EP 0 819 468 B1**
(45) Veröffentlichungstag und Bekanntmachung des Hinweises auf die Patenterteilung: **25.04.2001**
(21) Anmeldenummer: 97101091.3
(22) Anmeldetag: 24.01.1997
(51) Int. Cl.: B01J 23/888, B01J 23/86, C02F 1/72

(54) **Katalysator zur Oxidation von Abwasserverunreinigungen mittels Persäuren**
Catalyst for the oxidation of waste water impurities with peracids
Catalyseur d'oxydation des impuretés contenues dans les eaux usées à l'aide de peracides

(30) Priorität: 19.07.1996 DE 19610345
(43) Veröffentlichungstag der Anmeldung: 21.01.1998
(73) Patentinhaber: Krupp VDM GmbH, 58791 Werdohl (DE)
(72) Erfinder: Herda, Wilfried, 40489 Düsseldorf (DE); Heubner, Ulrich, Dr., 58791 Werdohl (DE); Koppe, Jürgen, Dr., 06258 Schkopau (DE); Lausch, Hartmut, Dr., 06128 Halle (DE); Tauchnitz, Heiko, Dr., 06688 Wengelsdorf (DE)

(56) Entgegenhaltungen:
- DE-A- 2 450 664
- DE-A- 4 333 328
- DE-C- 19 503 865

## Beschreibung

Die Erfindung betrifft einen vollmetallischen Katalysator zur Oxidation von Abwasserverunreinigungen, insbesondere von organischen Farbstoffen, in Gegenwart von Persäuren, wie zum Beispiel Peressigsäure und/oder Wasserstoffperoxid, ggf. in Verbindung mit organischen Säuren und Sauerstoff.

Es ist bekannt, zum Entfärben von textilen Abwässern Persäuren zu verwenden, die durch spezielle Katalysatoren so aktiviert werden, daß eine Oxidation der entsprechenden Abwasserverunreinigungen einsetzt. In der DE 43 33 328 wird für die kontrollierte Zersetzung von Peroxiden ein Oxidationskatalysator aus den Elementen Mangan, Eisen, Nickel, Kobalt, Cer, Kupfer, Molybdän, Vanadium und/oder Wolfram vorgeschlagen. Nach dem bekannten Stand der Technik werden die katalytisch wirksamen Verbindungen der oben aufgeführten Elemente auf übliche Trägermaterialien aufgetragen. Unter üblichen Trägermaterialien sind dabei oxidische Materialien, wie zum Beispiel Titandioxid, zu verstehen.

Nachteilig an derartigen Katalysatoren ist deren begrenzte Widerstandsfähigkeit gegen die Persäuren und deren Folgeprodukte. Dadurch bedingt sind diese Katalysatoren in der Praxis nach verhältnismäßig kurzen Zeiten von wenigen Monaten soweit geschädigt, daß sie durch eine neue Katalysatorencharge ersetzt werden müssen.

Damit verbunden ist neben den nicht unerheblichen Kosten für eine neue Katalysatorcharge auch eine Unterbrechung des Prozeßablaufs.

Der DE 195 03 865 ist ein Katalysator zur Oxidation von Abwasserinhaltstoffen in Gegenwart von Persäuren und/oder Wasserstoffperoxid ggf, in Verbindung mit organischen Säuren und Sauerstoff zu entnehmen. Dieser Nickel und Kupfer enthaltende Katalysator wird durch thermische Behandlung einer aus (in Gew.-%) 10 - 30 % Kupfer und 5 - 15 % Nickel sowie 60 - 80 % Mangan bestehenden Legierung bei Temperaturen von 400 - 1000°C in sauerstoffhaltiger Atmosphäre für eine Zeit von 0,25 - 5 h gewonnen. Der Katalysator kann sowohl in Form von Draht als auch in Form von Blechen, Spänen bzw. Pulver vorliegen. Zusätzlich können einzeln bzw. in Kombination auch Elemente, wie Eisen, Chrom, Silizium, Titan, Aluminium, Molybdän, Phosphor oder Stickstoff in einer Menge bis insgesamt 5 % zugegeben werden.

Der Erfindung liegt die Aufgabe zugrunde, einen neuen vollmetallischen Katalysator zur Oxidation von Abwasserverunreinigungen zu schaffen, der leicht entsorgbar ist und über eine lang anhaltende hohe Aktivität verfügt.

Diese Aufgabe wird erfindungsgemäß dadurch gelöst, daß eine Legierung, bestehend aus 10 bis 60 Masse-% Kobalt, 5 bis 50 Masse-% Nickel und 5 bis 20 Masse-% Wolfram sowie 5 bis 25 Masse-% Chrom, bei Temperaturen im Bereich von 250 bis 1250°C für eine Zeit von 0,05 bis 3 Stunden in sauerstoffhaltiger Atmosphäre thermisch behandelt wird.

Dieser Legierung können metallurgisch bedeutsame Zusätze, wie Kupfer, Eisen, Mangan bis insgesamt 25 Masse-% zugesetzt werden. Diese Elemente sind selber nicht in dem Maße katalytisch wirksam wie die erfindungsgemäßen Metalle, beeinträchtigen jedoch deren katalytische Wirksamkeit nicht.

Der erfindungsgemäße Katalysator kann in Form von Draht, Blech, Spänen, Pulver oder einer anderen Form vorliegen, welche die Ausbildung einer hinreichend großen wirksamen Oberfläche gewährleistet. Insbesondere die Ausführungsform Draht gestattet die Einbringung des Katalysators in Abwässerströme bei Einhaltung eines sehr geringen Stromwiderstandes.

Durch eine thermische Behandlung bei Temperaturen im Bereich von 250 bis 1250 °C für eine Zeit von 0,05 bis 3 Stunden in sauerstoffhaltiger Atmosphäre kann ein etwaiger Abfall in der Aktivität des Katalysators kompensiert werden.

Ein nicht mehr regenerierbarer Katalysator wird eingeschmolzen und steht dann erneut als Legierungsmaterial für die Katalysatorherstellung zur Verfügung.

Der erfindungsgemäße Katalysator bewirkt in Gegenwart von Persäuren und/oder Wasserstoffperoxid, ggf. in Verbindung mit organischen Säuren, die Oxidation von Abwasserverunreinigungen, insbesondere von organischen Farbstoffen, wobei durch den im Abwasser gelösten Sauerstoff eine zusätzliche Unterstützung dieser Oxidation auftritt. Durch Einblasen von weiterem Sauerstoff, vor allem in Form von Luft, kann dieser Effekt noch verstärkt werden.

Die Erfindung wird durch die nachfolgenden Beispiele näher erläutert. Alle Angaben sind Masse-%.

### Beispiele

2,36 g einer Legierung, bestehend aus 55 % Cobalt, 15 % Wolfram, 20 % Chrom und 10 % Nickel wurden in Drahtform mit einem Durchmesser von 0,071 mm 0,45 Stunden bei 1000 °C unter Luftatmosphäre im Muffelofen geglüht. Der so hergestellte Katalysator wurde anschließend für die oxidative Behandlung mittels Peressigsäure unter verschiedenen Bedingungen und in verschiedenen Abwässern eingesetzt.

### Beispiel 1

100 ml eines Abwassers, das 500 mg/l des Farbstoffes Tectilon blau 6G enthielt, wurden mit 1 ml 15 %iger Peressigsäure versetzt und - aufgewärmt auf 70 °C - auf 2,0 g des Katalysators gegeben.

Nach einer Verweilzeit von 10 Minuten war der Farbstoff zu 96,0 % abgebaut. Das behandelte Abwasser wurde abgegossen und der Katalysator erneut verwendet.

### Beispiel 2

100 ml eines Abwassers mit der gleichen Zusammensetzung wie im Beispiel 1 wurden mit 0,2 ml 15 %iger Peressigsäure versetzt und - aufgewärmt auf 70 °C - auf die 2,0 g Katalysator aus Beispiel 1 gegeben.

Nach einer Verweilzeit von 5 Minuten war der Farbstoff zu 97,8 % abgebaut. Das behandelte Abwasser wurde abgegossen und der Katalysator erneut verwendet.

### Beispiel 3

100 ml eines Abwassers mit der gleichen Zusammensetzung wie im Beispiel 1 wurden mit 0,5 ml 15 %iger Peressigsäure versetzt und - aufgewärmt auf 40 °C - auf die 2,0 g Katalysator aus Beispiel 2 gegeben.

Nach einer Verweilzeit von 20 Minuten war der Farbstoff zu 92,7 % abgebaut. Das behandelte Abwasser wurde abgegossen und der Katalysator erneut verwendet.

### Beispiel 4

100 ml eines Abwassers mit der gleichen Zusammensetzung wie im Beispiel 1 wurden mit 0,1 ml 15 %iger Peressigsäure versetzt und - aufgewärmt auf 70 °C - auf die 2,0 g Katalysator aus Beispiel 3 gegeben.

Nach einer Verweilzeit von 20 Minuten betrug der Farbstoffabbau 84,4 %. Das behandelte Abwasser wurde abgegossen und der Katalysator erneut verwendet.

### Beispiel 5

100 ml eines Abwassers, das 500 mg/l des Farbstoffs Tectilon blau 4R enthielt, wurden mit 0,2 ml 15 %iger Peressigsäure versetzt und - aufgewärmt auf 70 °C - auf 2,0 g des Katalysators aus Beispiel 4 gegeben.

Nach einer Verweilzeit von 10 Minuten betrug der Farbstoffabbau 88,9 %. Das behandelte Abwasser wurde abgegossen und der Katalysator erneut verwendet.

### Beispiel 6

100 ml eines Abwassers, das 500 mg/l des Farbstoffs Tectilon rot 2B enthielt, wurden mit 0,2 ml 15 %iger Peressigsäure versetzt und - aufgewärmt auf 70 °C - auf 2,0 g des Katalysators aus Beispiel 5 gegeben.

Nach einer Verweilzeit von 20 Minuten betrug der Farbstoffabbau 81,6 %. Das behandelte Abwasser wurde abgegossen und der Katalysator erneut verwendet.

### Beispiele 7 bis 12

Anlalog zu den vorherigen Beispielen wurden unterschiedlich gefärbte Abwässer (grün, braun, rot, blau, gelb, grau) hinsichtlich der Abbaubarkeit der Farbstoffe unter folgenden Bedingungen untersucht:
100 ml Abwasser
0,5 ml 15 %ige Peressigsäure 40 °C
2,0 g Katalysator, jeweils aus dem vorhergehenden Versuch stammend

Die Lösungen waren nach wenigen Minuten, spätestens jedoch nach 10 Minuten, vollständig entfärbt.

## Patentansprüche

1. Katalysator zur Oxidation von Abwasserverunreinigungen mittels Persäuren und/oder Wasserstoffperoxid ggf. in Verbindung mit organischen Säuren, und Sauerstoff,
**dadurch gekennzeichnet**, daß eine Legierung, bestehend aus 10 bis 60 Masse-% Cobalt, 5 bis 50 Masse-% Nickel und 5 bis 20 Masse-% Wolfram sowie 5 bis 25 Masse-% Chrom, bei Temperaturen im Bereich von 250 bis 1250 °C für eine Zeit von 0,05 bis 3 Stunden in sauerstoffhaltiger Atmosphäre thermisch behandelt wird.

2. Katalysator nach Anspruch 1,
**dadurch gekennzeichnet**, daß der Katalysator in Form von Draht, Blech, Spänen, Folien und/oder Pulver vorliegt.

3. Katalysator nach Anspruch 1 und 2,
**dadurch gekennzeichnet**, daß er zusätzlich mindestens eines der Elemente Kupfer, Eisen, Mangan, in einer Menge bis 25 Masse-% enthält.

4. Katalysator nach Anspruch 1 bis 3,
**dadurch gekennzeichnet**, daß er bei einem Abfall in der katalytischen Aktivität durch eine thermische Behandlung nach Anspruch 1 regenerierbar ist.

## Claims

1. Catalyst for the oxidation of waste water impurities by means of peracids and/or hydrogen peroxide, if necessary, in combination with organic acids, and oxygen,
characterized in that an alloy consisting of 10 to 60 % by mass cobalt, 5 to 50 % by mass nickel and 5 to 20 % by mass tungsten as well as 5 to 25 % by mass chromium is treated thermally in oxygenic atmosphere at temperatures within the range of 250 to 1250°C during a period of time of 0.05 to 3 hours.

2. Catalyst according to claim 1,
characterized in that the catalyst is present in form of wire, sheet metal, cuttings, foils and/or powder.

3. Catalyst according to claim 1 and 2,
characterized in that it additonally contains at least one of the elements copper, iron, manganese in an amount of up to 25 % by mass.

4. Catalyst according to claim 1 through 3,
characterized in that in case of a decline of the catalytic activity it is regenerable by means of a thermal treatment according to claim 1.

## Revendications

1. Catalysateur d'oxydation des impuretés contenues dans les eaux usées à l'aide des peracides et/ou de peroxyde d'hydrogène, le cas échéant, en combinaison avec des acides organiques, et de l'oxygène,
caractérisé en ce qu'un alliage composé de 10 à 60 % en poids de cobalt, 5 à 50 % en poids de nickel et 5 à 20 % en poids de tungstène ainsi que 5 à 25 % en poids de chrome est traité de manière thermique dans une atmosphère oxygénée aux températures dans l'ordre de 250 à 1250°C pendant une période de 0,05 à 3 heures.

2. Catalysateur selon la revendication 1
caractérisé en ce que le catalysateur est présent sous forme de fil de fer, de tôle, des copeaux, des feuilles et/ou de poudre.

3. Catalysateur selon la revendication 1 et 2,
caractérisé en ce qu'il contient supplémentairement au moins l'un des éléments cuivre, fer, manganèse dans une quantité jusqu'à 25 % en poids.

4. Catalysateur selon la revendication 1 à 3,
caractérisé en ce qu'il est régénérable à l'aide d'un traitement thermique selon la revendication 1 quand l'activité catalytique diminue.
